# EUROPEAN PATENT SPECIFICATION

(11) **EP 2 225 852 B1**
(45) Date of publication and mention of the grant of the patent: **08.06.2011**
(21) Application number: 08868636.5
(22) Date of filing: 22.12.2008
(51) Int. Cl.: H04L 12/24

(54) **A SYSTEM FOR MANAGING AND SUPERVISING NETWORKED EQUIPMENT ACCORDING TO THE SNMP PROTOCOL, BASED ON SWITCHING BETWEEN SNMP MANAGERS**
SYSTEM ZUR VERWALTUNG UND ÜBERWACHUNG EINER VERNETZTEN ANLAGE GEMÄSS SNMP-PROTOKOLL AUF DER BASIS VON UMSCHALTUNG ZWISCHEN SNMP-MANAGERN
SYSTÈME DE GESTION ET DE SUPERVISION D'UN ÉQUIPEMENT EN RÉSEAU CONFORME AU PROTOCOLE SNMP ET BASÉ SUR UNE COMMUTATION ENTRE LES GESTIONNAIRES SNMP

(30) Priority: 24.12.2007 IT TO20070938
(43) Date of publication of application: 08.09.2010
(73) Proprietor: SELEX COMMUNICATIONS S.P.A., 16151 GENOVA (IT)
(72) Inventor: SABBATINI, Giancarlo, I-00166 Roma (IT); BRUNO, Vittorio, I-00182 Roma (IT)
(74) Representative: Deambrogi, Edgardo
(86) International application number: PCT/IB2008/055490
(87) International publication number: WO 2009/083893

(56) References cited:
- EP-A- 0 772 319
- EP-A- 1 624 615
- US-B1- 7 058 067
- SAHAI A ET AL: "Towards distributed and dynamic networks management" NETWORK OPERATIONS AND MANAGEMENT SYMPOSIUM, 1998. NOMS 98., IEEE NEW ORLEANS, LA, USA 15-20 FEB. 1998, NEW YORK, NY, USA,IEEE, US, vol. 2, 15 February 1998 (1998-02-15), pages 455-464, XP010267420 ISBN: 978-0-7803-4351-1

## Description

The present invention relates to the management of a network infrastructure, and more specifically a system for managing and supervising networked equipment according to the SNMP protocol.

A. Sahai and C. Morin, in "Towards Distributed and Dynamic Network Management", Network Operations and Management Symposium (NOMS), vol.2, February 15, 1998, pages 455-464, disclose a distributed and dynamic architecture for network management of a heterogeneous distributed system according to the preamble of Claim 1.

SNMP (Simple Network Management Protocol) belongs to the Internet protocol suite defined by the IETF (Internet Engineering Task Force) and operates at layer 7 of the OSI model to enable management and supervision of networked equipment, in particular with regard to all aspects requiring administrative type actions.

SNMP provides for the monitoring and control of network equipment, for example to be informed of statistics on the state of equipment items (throughput, load, data related to the network interfaces, system performance, to cite some examples) or to modify their settings.

The fundamental components of an SNMP environment are the managed systems, the management agents and the management system (manager), a remote application module adapted to take management decisions, for example under the direct control of a human operator.

A managed system is represented by a network equipment item such as, for example, a simple network node, a network router, a peripheral device or any other device providing an SNMP management interface. The managed system hosts a management agent, which can be associated with a plurality of subagents. In the latter case, the management agent has the role of intermediary between the management system and the subagents, which execute the decisions.

Each agent or subagent is arranged to carry out the management decisions in the context of a particular equipment item or in relation to a particular aspect of the managed equipment item.

In the SNMP architecture, for every equipment item (managed system or subsystem), there is defined a database called a MIB (Management Information Base) which is managed by a corresponding agent and which contains all the information managed by the SNMP agent operating on the monitored equipment item, i.e. the state of the managed equipment item, or better still, a subset of state data limited to those aspects for which it is desired to provide management.

Within every MIB the objects are divided into categories, among which are highlighted here in particular:
- *System:* contains general information on the network equipment item;
- *Interfaces:* contains information relating to the network interfaces;
- *Address Translation:* contains information relating to the conversion of addresses;
- *Ip*/*Icmp*/*Tcp*/*Udp*/*Egp:* contains information relating to the IP, ICMP, TCP, UDP, EGP protocol respectively;
- *Transmission:* contains information on the transmission means used by every network interface;
- *Snmp:* contains information relating to the SNMP protocol.

The sorting of the MIB database is defined according to an SMI (Structure of Management Information) which defines how the information and its hierarchy (tree structure) to be inserted in the MIB database must be structured and therefore managed by an SNMP manager. Every modification to the MIB causes a corresponding change in the state of the equipment item represented, and vice versa, and both these functions are managed by an agent.

The access to the MIB (read- and write-access) represents the interface supplied to a manager module to manage the equipment item. Every MIB, although varying in its specific content, has the same general structure and the same general mechanisms of access by the manager (reading and writing of data). By virtue of the causal connection of the MIB, it is therefore possible for the manager to act on the state of an equipment item in a manner that is largely independent of the actual procedures that must be implemented by the agent to extract the state information represented in the MIB, or to carry out the state modifications following changes in the contents of the MIB.

More specifically, a manager communicates with the managed equipment mainly in two ways: sending SNMP requests and receiving SNMP notifications.

It is also possible to configure an agent so as to send a particular message (trap) to the manager when a determined event occurs, for example when a network interface stops functioning (when there is a fault, the SNMP agent monitoring the equipment item sends to the manager a message identifying the problem).

SNMP uses the UDP transmission protocol, in particular UDP port 161 is used for queries and responses, and UDP port 162 as the destination for "trap" messages generated by SNMP agents.

All the network equipment items managed by SNMP belong to a community, with which there is associated an identifier for ensuring the security of SNMP queries. An SNMP agent responds only to the information request made by a manager belonging to the same community. There are three types of community: (i) *"monitor",* which enables read operations only, i.e. only queries can be submitted to agents (the community name of which must correspond to that of the manager that has issued the request); (ii) *"control",* which enables, by means of SNMP agents, read/write operations to be performed on an equipment item, and therefore its settings to be varied; (iii) *"trap",* which enables an agent to send an SNMP trap message to the manager according to its particular configuration.

SNMP uses a series of basic message types to conduct its particular operation, defined in separate PDUs (Protocol Data Units), used to query a MIB on an SNMP agent, to sequentially read a MIB, to read a MIB with a single request, to modify the value inside a read/write-accessible MIB, to identify the response by an SNMP agent to a query by a manager, and to enable an agent to send a message when a determined event occurs.

There exist predefined messages, for example to indicate when an SNMP agent is reinitialized and the configuration has been changed, when an SNMP agent is reinitialized but without changes in configuration, when a connection with an agent is not functioning correctly, when the connection with the agent is restored, when an authentication with the agent has concluded badly, when problems related to the EGP (Exterior Gateway Protocol - used by routers) occur, or in the case of events predefined by the manufacturer of the network equipment item.

In a management system for the remote control of networked equipment on board military ships, it is desirable to implement a remote control of all managed equipment items, and which is centralized on a limited number of workstations. Of particular interest is the remote switching of audio and PTT lines from the Link-11 and Link-11/22 modems to HF and UHF radio vectors housed in the various radio rooms of the ship.

Currently, this is implemented through a plurality of audio matrices (generally five), each of which has associated an "embedded" SNMP agent, physically distributed at various points on the ship and interconnected serially, each reachable at a different IP address.

The manager connected to one of the IP addresses of the audio matrices sends commands to a logical global matrix (MGL) formed by the juxtapositioning of the physical matrices leading to individual equipment items, forming a logical community of equipment.

Any variation in the state of the nodes of the MGL is inserted in the Management Information Base (MIB) of the agent which has received the notification. Immediately after that, this change is reflected on the MIBs of the agents of the four other matrices. Therefore, to remotely control the entire MGL, it is sufficient to communicate via SNMP by means of a manager with only one SNMP agent reachable via the associated IP.

This configuration becomes problematic at the moment when control of the physical matrix from which commands are issued is lost, because it is switched off or has a failure or other anomalous conditions compromising its effectiveness. In fact, control of the four other matrices is lost, even if these are still operating perfectly.

The aim of the present invention is therefore to provide a satisfactory solution to the problem explained above, making the management of a network of equipment items that can be controlled via SNMP more robust, avoiding the drawbacks of the prior art.

According to the present invention, such an aim is achieved by a system for managing and supervising networked equipment, having the features claimed in Claim 1.

In summary, the present invention is based on the principle of making transparent to users of networks or structures of equipment items that can be controlled via SNMP and that belong to a logical community (for example an operator who remotely controls a logical global matrix in the case of an architecture of audio matrices that are physically distributed) the current connection (therefore in the example, the particular audio matrix to which it is connected), introducing redundancy in the management system, hence providing the possibility of various control channels for the managed equipment items.

Therefore a processing module for controlling the switching between SNMP managers of a network infrastructure is used to dynamically select one of a plurality of SNMP managers available based on conditions relating to state and priority, and specifically checking whether the manager is connected to an active SNMP agent and whether the agent sees the equipment item controlled by it as switched on and does not detect failures or other possible anomalies which might compromise its operation.

If more than one SNMP manager meets the above conditions, the control module is arranged to select the one with a higher priority.

More specifically, the control module according to the invention is adapted to collect information on the state of all the agents of the network infrastructure, to check which network equipment items (for example, the audio matrices in a management system for distributed audio lines) are deactivated, which are found to be in a failure condition and which are in an isolation condition (equipment item that is functioning but incapable of communicating with the others). This information is gathered in an associated storage structure (for example, internal) on the module, through which the latter selects the "SNMP manager - SNMP agent - equipment" line that is appropriate for establishing communication with the MGL. Typically, there will be more than one line ready to communicate, in which case the module is arranged to select the line configured as priority line. During steady-state operation, the module according to the invention is arranged to keep track of faults on the communication lines and, in the event of a fault on the line currently in use, to replace this line with one available according to priority. If there is no such line, and communication must be interrupted, the module is arranged to declare an equipment timeout to the higher hierarchical level management and supervision system layers (i.e. the layers that send to the module the commands to be distributed to the SNMP managers).

The control module is adapted to accept any number of parameters to take into consideration for the purposes of choosing the manager. In the case of the previous example, in addition to the "active agent" and "matrix on" conditions, "failure" and "isolation" conditions have been considered, but other different conditions can be contemplated specific to the equipment used, or some of those referred to can be eliminated, without thereby departing from the principles of the invention.

By way of example, the control module according to the invention is adapted to be used also in a system for managing and controlling a closed-circuit television installation, choosing a server to be connected to out of a plurality of available servers, on each of which an SNMP agent is active.

More generally, the invention is applied to implementations in which the processing load is distributed over several objects (PCs, equipment, etc.) equipped with their own SNMP agents, and therefore the associated MIBs are aligned, but also in the case of equipment that has no SNMP interface available, provided that an SNMP proxy agent adapted to provide such an interface is introduced in such an architecture.

Other features and advantages of the invention will be explained in greater detail in the following detailed description of one of its embodiments which is given by way of non-limiting example with reference to the appended drawings in which:
Figure 1 is an example of an interconnection arrangement of management system modules for networked equipment, specifically audio matrices of a communication infrastructure on board military ships; and
Figure 2 is a state diagram representing the operation of a processing control module of the management system according to the invention.

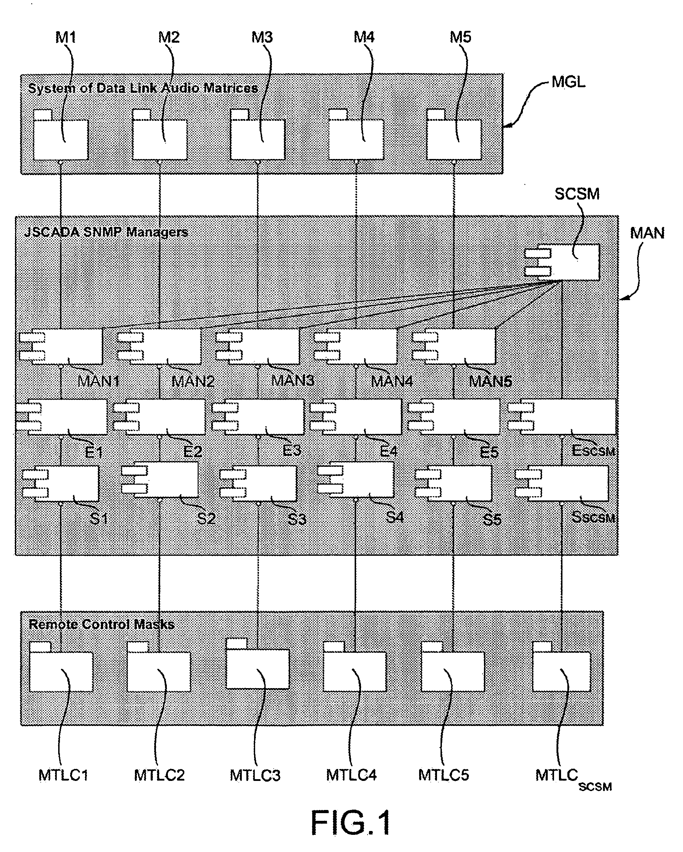

Figure 1 shows an example of an interconnection arrangement of modules cooperating in the management of a system of Data Link audio matrices of a communication management network on board a naval unit, and which are arranged to remotely switch audio and PTT lines from Link-11 and Link-11/22 modems to HF and UHF radio vectors housed in various radio rooms in the naval unit.

Naturally, such an arrangement is applicable to any network of equipment items, which operates under the same SNMP management protocol without departing from the principle of the invention.

"MGL" indicates a logical global matrix formed by the juxtapositioning of physical matrices M1-M5 for routing radio communications, leading to individual radio equipment items. The matrix MGL therefore forms, in the present application, a logical community of managed systems.

Each matrix M1-M5 has attached an "embedded" SNMP agent, and a management block MAN comprising a plurality of corresponding manager modules MAN1-MAN5 adapted to communicate with a respective agent of the matrices M1-M5 by means of a connection to the corresponding IP address.

The manager modules MAN1-MAN5 receive management commands from an operator through a respective remote control mask MTLC1-MTLC5 and a respective chain of TCP/IP communication interface socket modules S1-S5 and Equipment modules E1-E5.

The MIB database of every agent is updated following any variation in the state of the associated matrix (equipment item), and the change is also reflected on the MIB databases of the agents of the other matrices (equipment items) belonging to the same logical community. As regards the structure, same for all the MIBs, the objects are contained within the following container objects:
- *tlc:* in which information is stored regarding the states of all the equipment items and from which it is possible to configure open/close settings for the nodes of the physical matrices;
- *fault:* in which track is kept of the presence or absence of at least one error in the group of matrices;
- *notifications:* in which there are indicated those variations in parameters or equipment conditions that the associated Manager will be informed of via an asynchronous message;
- *mtxDistributed:* in which there is stored in detail information on which specific matrix is malfunctioning or in isolation.

According to the invention, the management block MAN also includes a control module SCSM for switching between managers MAN1-MAN5 and adapted to receive commands from an operator through a specific remote control mask MTLC_{SCSM}, a specific socket module S_{SCSM} and a specific equipment module E_{SCSM}, and connected to the plurality of manager modules MAN1-MAN5.

The SCSM module includes a first storage structure adapted to store an order of priority of the managers MAN1-MAN5, indicative of the priority of selection of these managers, for example defined on the basis of settings requested by the operator, who has a general view of the whole system, and who can consider useful that, all conditions being equal, a connection to a particular equipment item agent, placed in a certain room in the naval unit, is always made. The SCSM module also includes a second storage structure adapted to store information on the states of the agents of equipment items belonging to the logical community monitored (in the limiting case, the entire network infrastructure).

The SCSM module is arranged to dynamically select one of a plurality of SNMP managers available based on conditions of state and priority of the agents and of the associated managers, respectively. Specifically, it is arranged to check whether the currently selected manager is connected to an active SNMP agent and whether this agent sees the equipment item controlled by it as switched on and does not detect failures or other possible anomalies which might compromise its operation, as well as to switch between managers in the event of a fault on the "SNMP manager - SNMP agent - equipment" line currently in use, choosing a new "manager-agent-equipment" line available according to priority, or to declare an interruption in communication.

If more than one SNMP manager meets the above conditions, the SCSM module is arranged to select the one with the highest priority.

The state conditions considered by the SCSM module in selecting the "manager-agent-equipment" line can be different, for example only the following are indicated: equipment deactivation, equipment failure, equipment isolation, occurrence of a pre-established equipment state, even if this does not compromise its operation; but other state conditions specific to the controlled equipment can be included.

When operating, an operator who wants to control the logical matrix MGL uses the remote control mask named MTLC_{SCSM} and inserts commands into an XML protocol, which are picked up and converted by the modules S_{SCSM} and E_{SCSM} respectively into a form that can be understood by an SNMP manager, and are sent to the SCSM module.

The SCSM module, through the information that it has obtained by means of interaction with the managers MAN1-MAN5 and based on the pre-established selection priority, selects the manager module to which all the commands are to be forwarded (for example MAN1). At this point, the preselected manager module deals with forwarding the abovementioned commands to the corresponding agent via the SNMP protocol. Similarly, the responses of the agent will always pass through the previously selected manager, following the abovementioned route backwards.

When the SCSM module discovers problems in the SNMP communication between the manager MAN1 and the matrix M1 (for example, network problems or matrix switched off), or it notices critical failures in the operation of the matrix or isolation of the matrix, it dynamically selects another manager module, if available, and therefore defines another

SNMP route and therefore another physical matrix for accessing the logical matrix MGL.

The direct lines of communication between managers MAN1-MAN5 and physical matrices M1-M5 (one for each matrix), which do not involve the SCSM module, provide for, under emergency conditions, controlling only one matrix and no longer the logical matrix MGL, through the remote control masks MTLC1-MTLC5.

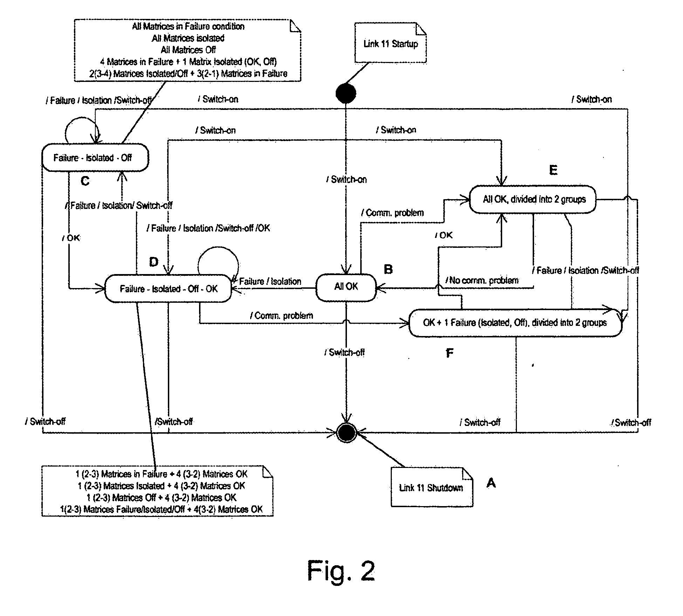

Figure 2 shows a state diagram to represent by way of example the internal selection logic with which the SCSM module operates, still with reference to the specific case of a system of Data Link audio matrices.

For the sake of simplicity, only six macroconditions have been defmed (in fact, 1064 configurations are possible):
A) All matrices M1-M5 are off;
B) All matrices M1-M5 are on and operating (OK);
C) All matrices M1-M5 are in Failure/Isolated/Off conditions (in all possible combinations);
D) All matrices M1-M5 are in OK/Failure/Isolated/Off conditions (in all possible combinations);
E) All matrices M1-M5 are in OK conditions and divided into two non-communicating groups (in all possible combinations);
F) Four matrices are in OK conditions and are divided into two non-communicating groups; one matrix is in Failure/Isolated/Off condition (in all possible combinations).

The SCSM module, depending on whether it must execute a startup or runtime sequence, will be reconfigured according to the following tables:

### STARTUP

| ***State*** | ***Management System Startup*** | ***Startup of Matrices*** |
|---|---|---|
| A | No action. | No action. |
| B | Connection to the matrix with highest priority. | Connection to the first activated matrix. |
| C | No action. | No action. |
| D | Connection to the matrix with highest priority. | Connection to the first activated matrix in OK condition. |
| E | Connection to the matrix with highest priority. | Connection to the first activated matrix. |
| F | Connection to the matrix with highest priority. | Connection to the first activated matrix in OK condition. |

### RUNTIME

| ***From*** | ***To*** | ***Runtime*** |
|---|---|---|
| B | D | If the matrix chosen previously by SCSM enters a failure state, the higher-priority matrix is targeted at; otherwise SCSM does not change the matrix targeting. |
| D | D | If the matrix chosen previously by SCSM enters a failure state, the higher-priority matrix is targeted at; otherwise SCSM does not change the matrix targeting. |
| C | D | The OK matrix with higher priority is connected. |
| B | E | SCSM does not change the targeting to the matrix. |
| E | B | SCSM does not change the targeting to the matrix. |
| E | F | If the matrix chosen previously by SCSM enters a failure state, the higher-priority matrix is targeted at; otherwise SCSM does not change the matrix targeting. |
| F | E | SCSM does not change the targeting to the matrix. |
| D | F | SCSM does not change the targeting to the matrix. |

Advantageously, the system according to the invention can be used on every type of equipment network infrastructure, for example a communications network installed on board naval units, the workload of the network being distributed over several equipment items, in order to make the switching of the circuits that enable HF- and UHF-radio communications more robust, and to manage a closed-circuit television system.

Naturally, the principle of the invention remaining the same, the forms of embodiment and details of construction may be varied widely with respect to that described and illustrated purely by way of non-limiting example, without thereby departing from the scope of protection of the present invention, which is defined by the appended claims.

## Claims

1. A system for managing and supervising networked equipment according to an SNMP protocol, comprising:
- a plurality of management agents, each of which is associated with a corresponding network equipment item (M1-M5) belonging to a community and arranged to carry out management decisions in the context of the associated equipment (M1-M5);
- a plurality of MIB databases, each of which is associated with a respective managed equipment item (M1-M5) and includes a set of state data for the equipment item, which MIB databases are accessible to the agent operating on the monitored equipment item; and
- a plurality of manager modules (MAN1-MAN5) adapted to take management decisions under the control of a human operator, each of which is arranged to access a MIB database of a respective managed equipment item (M1-M5) in order to send requests and/or to receive notifications,
a module (SCSM) for controlling the switching between managers (MAN1-MAN5) of equipment items which are linked in a logical community (MGL) in order to manage a workload distributed over several equipment items (M1-M5),
and arranged to define a manager-agent management connection for managing all the equipment items (M1-M5) of the logical community (MGL),
said witching control module (SCSM) being adapted to receive commands from an operator and being arranged to dynamically select one of the plurality of managers (MAN1-MAN5) available **characterised in that** the MIB databases of every management agent for the equipment items (M1-M5) are aligned in content, and **in that** said switching control module (SCSM) is arranged to dynamically select one of the plurality of managers (MAN1-MAN5) available, depending on the state of the monitored equipment (M1-M5) and on the x associated agent and based on a pre-established order of priority among managers (MAN1-MAN5).

2. A system according to Claim 1, in which the switching control module (SCSM) includes a first storage structure adapted to store an order of priority of the managers (MAN1-MAN5) of the equipment of the logical community (MGL), indicative of the priorities of selection of these managers (MAN1-MAN5).

3. A system according to Claim 1, in which the switching control module (SCSM) is arranged to check whether a manager (MAN1-MAN5) is connected to an active agent and whether the agent sees the equipment item (M1-M5) monitored by it as switched on and does not detect operational anomalies.

4. A system according to Claim 3, in which the switching control module (SCSM) is arranged to acquire state information relating to the agents and equipment items (M1-M5) of the logical community (MGL), this information including deactivation, failure and/or isolation state information, and to store the information in a second storage structure.

5. A system according to Claim 3 or Claim 4, in which the switching control module (SCSM) is arranged to declare a timeout of a logical community (MGL) of equipment (M1-M5) to a management and supervision system of higher hierarchical level when there is no active equipment (M1-M5) or agent available in the logical community (MGL).

6. A system for managing and supervising a plurality of audio matrices (M1-M5) adapted to form a logical global matrix (MGL) for the switching of audio and/or PTT lines from modem equipment to HF or UHF radio vectors distributed on board a naval unit, each audio matrix (M1-M5) having attached an SNMP agent adapted to communicate with a respective manager (MAN1-MAN5) through an IP address associated with the matrix (M1-M5), the system being a system according to any one of Claims 1 to 5.

7. A system for managing and supervising a closed-circuit television installation including a plurality of distributed transmission servers, linked in a logical community, each server having attached an SNMP agent adapted to communicate with a respective manager through an IP address associated with the server, the system being a system according to any one of Claims 1 to 5.

## Patentansprüche

1. System zum Managen und Überwachen einer vernetzten Anlage gemäß einem SNMP-Protokoll, wobei das System umfasst:
- eine Vielzahl von Managementagenten, von denen jedem eine entsprechende Anlagenkomponente (M1-M5) zugeordnet ist, die zu einer Gemeinsamkeit gehören und so angeordnet sind, dass sie Managemententscheidungen im Zusammenhang mit der zugeordneten Anlage (M1-M5) ausführen;
- eine Vielzahl von MIB-Datenbasen, von denen jeder eine entsprechende gemanagte Anlagenkomponente (M1-M5) zugeordnet ist, wobei sie eine Reihe von Zustandsdaten für die Anlagenkomponente aufweist, wobei auf die MIB-Datenbasen mit dem Agenten zugegriffen werden kann, der mit der überwachten Anlagenkomponente arbeitet; und
- eine Vielzahl von Managermodulen (MAN1-MAN5), die so aufgebaut sind, dass sie unter der Steuerung einer Bedienungsperson Managemententscheidungen treffen, wobei jedes so angeordnet ist, dass es auf eine MIB-Datenbasis einer entsprechenden gemanagten Anlagenkomponente (M1-M5) zugreifen kann, um Anfragen zu senden und/oder Mitteilungen zu empfangen,
ein Modul (SCSM) zum Steuern der Umschaltung zwischen den Managern (MAN1-MAN5) der Anlagenkomponenten, die in einer logischen Gemeinsamkeit (MGL) vernetzt sind, um eine Arbeitsbelastung zu managen, die über mehrere Anlagenkomponenten (M1-M5) verteilt ist, und das so aufgebaut ist, dass es eine Manager-Agent Managementverbindung festlegt, um alle Anlagenkomponenten (M1-M5) der logischen Gemeinsamkeit (MGL) zu managen, wobei das Umschaltsteuermodul (SCSM) so eingerichtet ist, dass es Befehle von einer Bedienungsperson empfängt, und so aufgebaut ist, dass es einen Manager (MAN1-MAN5) aus der Vielzahl der bereitstehenden Manager dynamisch auswählt,
**dadurch gekennzeichnet, dass** die MIB-Datenbasen eines jeden Managementagenten für die Anlagenkomponenten (M1-M5) inhaltlich ausgerichtet sind, und dass das Umschaltsteuermodul (SCSM) so angeordnet ist, dass es in Abhängigkeit vom Zustand der überwachten Anlage (M1-M5) und des zugeordneten Agenten sowie aufgrund einer vorbestimmten Prioritätenfolge unter den Managern (MAN1-MAN5) einen Manager (MAN1-MAN5) aus der Vielzahl der Manager dynamisch auswählt, die bereitstehen.

2. System gemäß Anspruch 1, wobei das Umschaltsteuermodul (SCSM) eine erste Speicherstufe aufweist, die so aufgebaut ist, dass sie eine Prioritätenfolge der Manager (MAN1-MAN5) der Anlage der logischen Gemeinsamkeit (MGL) speichert, die die Auswahlprioritäten dieser Manager (MAN1-MAN5) angibt.

3. System gemäß Anspruch 1, wobei das Umschaltsteuermodul (SCSM) so aufgebaut ist, dass es prüft, ob ein Manager (MAN1-MAN5) mit einem aktiven Agenten verbunden ist, und ob der Agent erkennt, dass die Anlagenkomponente (M1-M5), die von ihm überwacht wird, eingeschaltet ist, und dass keine Unregelmäßigkeiten im Betrieb festgestellt werden.

4. System gemäß Anspruch 3, wobei das Umschaltsteuermodul (SCSM) so aufgebaut ist, dass es eine Zustandsinformation erlangt, die sich auf die Agenten und die Anlagenkomponenten (M1-M5) der logischen Gemeinsamkeit (MGL) bezieht, wobei diese Information Informationen über den Zustand einer Deaktivierung, einer Betriebsstörung und/oder einer Abtrennung aufweist, und dass es die Information in einer zweiten Speicherstufe steuert.

5. System gemäß Anspruch 3 oder Anspruch 4, wobei das Umschaltsteuermodul (SCSM) so aufgebaut ist, dass es ein Timeout einer logischen Gemeinsamkeit (MGL) der Anlage (M1-M5) an ein Management- und Überwachungssystem mit einer höheren hierarchischen Ebene erklärt, wenn in der logischen Gemeinsamkeit (MGL) keine aktive Anlage (M1-M5) oder Agent bereitsteht.

6. System zum Managen und Überwachen einer Vielzahl von Audiomatrizen (M1-M5), die so aufgebaut sind, dass sie eine logische, globale Matrix (MGL) für das Umschalten von Ton- und/oder PTT-Leitungen von einer Modemanlage auf HF-oder UHF-Funkvektoren bilden, die an Bord eines Flottenverbands verteilt sind, wobei an jede Audiomatrix (M1-M5) ein SNMP-Agent angeschlossen ist, der so aufgebaut ist, dass er mit einem entsprechenden Manager (MAN1-MAN5) über eine IP-Adresse kommuniziert, die der Matrix (M1-M5) zugeordnet ist, wobei das System ein System gemäß irgendeinem der Ansprüche 1 bis 5 ist.

7. System zum Managen und Überwachen einer internen Fernsehanlage, wobei das System eine Vielzahl von dezentralen Übertragungsservern umfasst, die in einer logischen Gemeinsamkeit vernetzt sind, wobei an jeden Server ein SNMP-Agent angeschlossen ist, der so aufgebaut ist, dass er mit einem entsprechenden Manager über eine IP-Adresse kommuniziert, die dem Server zugeordnet ist, wobei das System ein System gemäß irgendeinem der Ansprüche 1 bis 5 ist.

## Revendications

1. Système pour gérer et superviser un équipement mis en réseau selon un protocole SNMP, comprenant :
- une pluralité d'agents de gestion, chacun est associé à un article d'équipement de réseau correspondant (M1-M5) appartenant à une communauté et agencé pour exécuter des décisions de gestion dans le contexte de l'équipement associé (M1-M5) ;
- une pluralité de bases de données MIB, chacune est associée à un article d'équipement géré respectif (M1-M5) et inclut un ensemble de données d'état pour l'article d'équipement, lesquelles bases de données MIB sont accessibles à l'agent opérant sur l'article d'équipement surveillé; et
- une pluralité de modules gestionnaires (MAN1-MAN5) adaptés pour prendre des décisions de gestion sous le contrôle d'un opérateur humain, chacun est agencé pour accéder à une base de données MIB d'un article d'équipement géré respectif (M1-M5) afin d'envoyer des requêtes et/ou de recevoir des notifications,
un module (SCSM) pour contrôler la commutation entre des gestionnaires (MAN1-MAN5) d'articles d'équipement qui sont reliés dans une communauté logique (MGL) afin de gérer une charge de travail répartie sur plusieurs articles d'équipement (M1-M5), et agencé pour définir une connexion de gestion gestionnaire-agent pour gérer tous les articles d'équipement (M1-M5) de la communauté logique (MGL),
ledit module de contrôle de commutation (SCSM) étant adapté pour recevoir des commandes en provenance d'un opérateur et étant agencé pour sélectionner dynamiquement un de la pluralité de gestionnaires (MAN1-MAN5) disponibles, **caractérisé en ce que** les bases de données MIB de tous les agents de gestion pour les articles d'équipement (M1-M5) sont alignées quant au contenu, et **en ce que** ledit module de contrôle de commutation (SCSM) est agencé pour sélectionner dynamiquement un de la pluralité de gestionnaires (MAN1-MAN5) disponibles en fonction de l'état de l'équipement surveillé (M1-M5) et de l'agent associé et sur la base d'un ordre de priorité préétabli entre les gestionnaires (MAN1-MAN5).

2. Système selon la revendication 1, dans lequel le module de contrôle de commutation (SCSM) inclut une première structure de stockage adaptée pour stocker un ordre de priorité des gestionnaires (MAN1-MAN5) de l'équipement de la communauté logique (MGL), indicatif des priorités de sélection de ces gestionnaires (MAN1-MAN5).

3. Système selon la revendication 1, dans lequel le module de contrôle de commutation (SCSM) est agencé pour vérifier si un gestionnaire (MAN1-MAN5) est connecté à un agent actif et si l'agent voit l'article d'équipement (M1-M5) qu'il surveille comme allumé et ne détecte pas d'anomalies opérationnelles.

4. Système selon la revendication 3, dans lequel le module de contrôle de commutation (SCSM) est agencé pour acquérir des informations d'état relatives aux agents et articles d'équipement (M1-M5) de la communauté logique (MGL), ces informations incluant des informations de désactivation, de défaillance et/ou d'état d'isolement, et pour stocker les informations dans une seconde structure de stockage.

5. Système selon la revendication 3 ou la revendication 4, dans lequel le module de contrôle de commutation (SCSM) est agencé pour déclarer un dépassement du temps imparti d'une communauté logique (MGL) d'équipement (M1-M5) à un système de gestion et de supervision de niveau hiérarchique supérieur lorsqu'il n'y a pas d'équipement actif (M1-M5) ou d'agent disponible dans la communauté logique (MGL).

6. Système pour gérer et superviser une pluralité de matrices audio (M1-M5) adaptées pour former une matrice logique globale (MGL) pour la commutation de lignes audio et/ou PTT d'un équipement de modem à des vecteurs radio HF ou UHF répartis à bord d'une unité navale, chaque matrice audio (M1-M5) ayant rattaché un agent SNMP adapté pour communiquer avec un gestionnaire respectif (MAN1-MAN5) par l'intermédiaire d'une adresse IP associée à la matrice (M1-M5), le système étant un système selon l'une quelconque des revendications 1 à 5.

7. Système pour gérer et superviser une installation de télévision en circuit fermé incluant une pluralité de serveurs de transmission répartis, reliés dans une communauté logique, chaque serveur ayant rattaché un agent SNMP adapté pour communiquer avec un gestionnaire respectif par l'intermédiaire d'une adresse IP associée au serveur, le système étant un système selon l'une quelconque des revendications 1 à 5.
